## Europäisches Patentamt

## European Patent Office

## Office européen des brevets

(11) Numéro de publication: **0 254 629**
**B1**

(12) # FASCICULE DE BREVET EUROPEEN

(45) Date de publication du fascicule du brevet:
**27.09.89**

(51) Int. Cl.⁴: **F16D 51/22**, F16D 65/52,
F16D 65/22, F16D 65/08

(21) Numéro de dépôt: **87401637.1**

(22) Date de dépôt: **10.07.87**

(54) **Ressort pour l'assemblage d'un frein à tambour.**

(30) Priorité: **23.07.86 FR 8610694**

(43) Date de publication de la demande:
**27.01.88 Bulletin 88/4**

(45) Mention de la délivrance du brevet:
**27.09.89 Bulletin 89/39**

(84) Etats contractants désignés:
**DE ES GB IT**

(56) Documents cités:
**EP-A- 0 146 444**
**FR-A- 2 155 321**
**FR-A- 2 378 207**
**FR-A- 2 514 090**
**GB-A- 2 014 673**
**US-A- 2 292 017**
**US-A- 4 470 486**

(73) Titulaire: **BENDIX France, 126, rue de Stalingrad,
F-93700 Drancy(FR)**

(72) Inventeur: **Denree, Michel, 10 Place Pluton,
F-93600 Aulnay sous Bois(FR)**
Inventeur: **Michoux, Eric, 17, rue du Docteur Bring,
F-94350 Villiers Sur Marne(FR)**

(74) Mandataire: **Lejet, Christian et al, Division Technique
Service Brevets BENDIX Europe 126, rue de Stalingrad,
F-93700 Drancy(FR)**

ACTORUM AG

## Description

L'invention a pour objet un ressort pour l'assemblage d'un frein à tambour.

Ce frein est du type comportant deux segments sollicités vers le tambour par un moteur de frein agissant, à l'encontre d'un ressort de rappel, sur les premières extrémités desdits segments alors que leurs autres extrémités coopèrent avec un bloc d'ancrage, l'un des segments portant un levier de frein à main articulé sur un pivot voisin de la première extrémité d'un des segments, ledit levier étant relié à l'autre segment par une entretoise dont une extrémité est appliquée contre ledit levier par un ressort, ledit levier comportant une butée qui coopère avec l'âme du segment qui le porte etagit à l'encontre dudit ressort pour définir la position de repos du levier.

Un tel frein à tambour est décrit dans EP-A 0 346 444.

L'invention propose un perfectionnement à ce frein connu qui consiste à réaliser au moyen d'un ressort unique en fil élastique plusieurs fonctions réalisées par: le ressort sollicitant l'entretoise contre le levier de frein à main, la butée prévue entre l'âme et ledit levier tout en assurant en même temps l'immobilisation du pivot de levier à frein à main à la position de repos du levier.

Pour obtenir ce résultat, il a été prévu que ledit ressort consiste en un fil métallique élastique en forme de V ayant une extrémité de ses branches formant crochet qui assure le maintien axial du pivot du levier, ladite branche passant au travers un passage prévu dans ladite entretoise pour la solliciter élastiquement vers le levier en coopérant avec l'autre branche du V qui comporte des moyens d'ancrage sur l'âme du segment portant le levier et/ou sur ce dernier, ces moyens d'ancrage formant butée.

Selon une autre caractéristique de l'invention, les moyens d'ancrage consistent en une partie de fil rabattue à 90° par rapport au plan du V et qui coopère avec l'âme du segment et le levier qui lui est adjacent.

Etant donné l'élasticité du ressort, il est possible de solliciter la partie de fil rabattue en écartement par rapport au point où elle coopère, en formant butée, entre l'âme et le levier, ce qui permet un démontage facile du frein.

L'invention sera mieux comprise à la lecture de la description qui va suivre et se réfère aux dessins annexés dans lesquels :

La Figure 1 représente un frein à tambour d'un type connu ;

la Figure 2 est une vue partielle d'un frein à tambour du même type que celui de la Figure 1 montrant les perfectionnements selon l'invention ;

la Figure 3 est une vue selon la flèche "3" de la Figure 2 montrant une entretoise disposée entre les deux segments du frein ;

la Figure 4 est une vue selon la flèche "4" de la Figure 2 montrant, avec arrachements, la liaison réalisée par un ressort, entre segment, levier de frein à main et entretoise ;

la Figure 5 est une vue en coupe selon la ligne 5-5 de la Figure 3 ;

la Figure 6 montre une liaison par ressort entre segment, levier de frein à main et entretoise selon un second mode de réalisation ;

la Figure 7 est une vue selon la flèche "7" de la Figure 6 ;

la Figure 8 montre une liaison par ressort entre segment, levier de frein à main et entretoise selon un troisième mode de réalisation, et ;

la figure 9 est une vue selon la flèche "9" de la Figure 8.

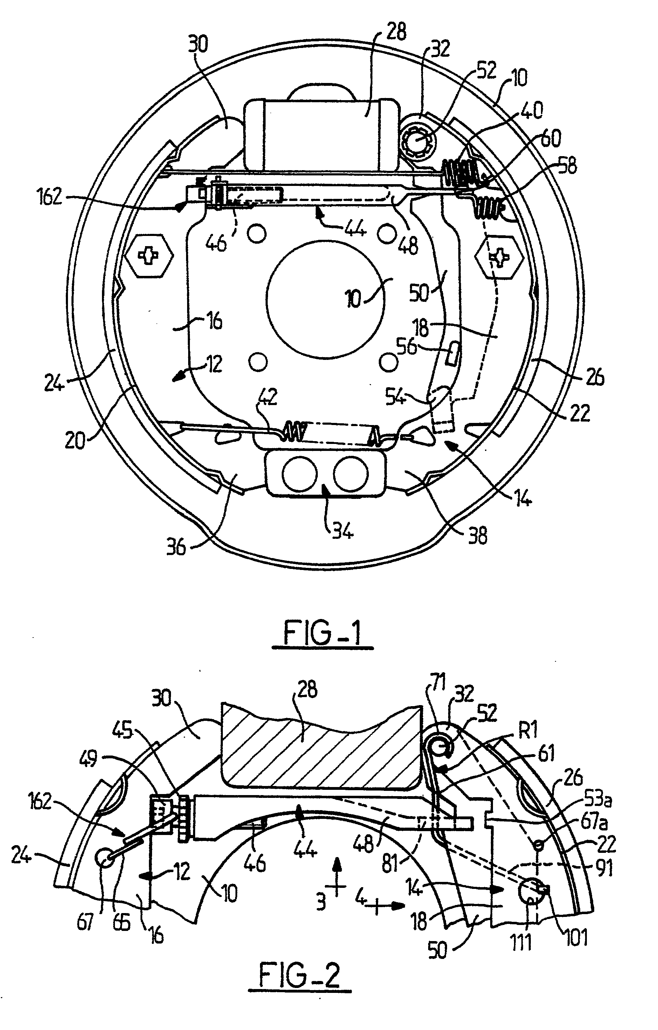

Le frein à tambour connu (EP-A-0 146 444) représenté à la Figure 1 comprend une plaque support 10 associée à une partie fixe d'un véhicule (non représentée) et sur laquelle coulissent deux segments de frein 12 et 14. Chacun des segments 12 et 14 comprend une âme sensiblement plane 16,18 et une jante arquée 20, 22 sur laquelle est fixée une garniture 24,26 respectivement par des rivets ou par collage. Des moyens de serrage tels qu'un cylindre de roue 28, sont disposés entre les extrémités adjacentes 30 et 32 des segments 12 et 14 respectivement. Un bloc d'ancrage 34 solidaire de la plaque support 10 coopère avec les autres extrémités 36 et 38 des segments 12 et 14. Des ressorts de rappel 40 et 42 sont disposés respectivement au voisinage du cylindre de roue 28 et du bloc d'ancrage 34 afin de solliciter les extrémités 30 et 32 des segments contre le cylindre de roue 28 et les extrémités 36 et 38 des segments contre le bloc d'ancrage 34. Une entretoise 44 est montée entre les segments 12 et 14 au voisinage du cylindre de roue 28 de façon à définir une distance séparant au repos les extrémités 30 et 32 des segments. L'entretoise 44 comporte un dispositif de réglage automatique du type de celui décrit dans la demande de brevet EP-A-077 726. L'entretoise 44 comporte deux éléments 46 et 48 qui suivent le mouvement des segments 12 et 14.

Le frein à tambour comporte une commande mécanique comprenant un levier 50 articulé par une de ses extrémités sur un axe formant pivot 52 monté sur l'extrémité 32 du segment 14, son autre extrémité 54 étant reliée à un câble de commande aboutissant à un levier de frein à main situé dans la cabine du véhicule. Le levier 50 comporte une saillie 56 qui s'appuie sur la tranche de l'âme 18 du segment 14 pour définir la position derepos du levier 50. L'entretoise 44 et plus précisément son élément 48 est sollicitée contre le levier 50 par le ressort de rappel 40 des segments. Un ressort de rappel 58 du levier de frein à main 50 est monté entre l'âme 18 du segment 14 et un prolongement 60 de l'élément 48 de l'entretoise 44. L'élément 46 est accroché au segment 12 au moyen d'un dispositif d'accrochage désigné dans son ensemble par la référence 162.

Pour démonter le frein de la Figure 1, en vue du remplacement des segments usés, par exemple, on enfonce le levier 50 suffisamment pour dégager la butée 56 appliquée contre l'âme 18 du segment 14.

En se référant aux Figures 2 à 5, on décrira maintenant un premier mode de réalisation de l'invention.

Dans ces figures 2 à 5, on a utilisé les chiffres de référence déjà utilisés sur la Figure 1 pour désigner des éléments similaires ou identiques.

Pour ne pas nuire à la clarté de la Figure 2, on n'a pas montré le ressort (référencé 40 sur la Figure 1) qui sollicite les extrémités 30 et 32 des segments 12 et 14 contre les pistons du cylindre de roue 28.

Pour réaliser la fonction du ressort 58 de la Figure 1 qui sollicite l'entretoise 44 vers le levier de frein à main 50, on utilise un ressort R1 qui a la forme d'un V à angle obtus. Une branche 61 du V comporte une extrémité libre recourbée en forme de crochet 71 qui coopère avec une gorge radiale ménagée dans l'axe formant pivot 52 pour assurer l'immobilisation de ce dernier. La branche 61, sensiblement rectiligne, traverse un passage 81 ménagé dans le corps 48 de l'entretoise 44. Au-delà du sommet de l'angle obtus, on trouve l'autre branche 91 du V, sensiblement rectiligne, qui se termine à son extrémité libre par une partie de fil rabattue 101 sensiblement perpendiculaire à la branche 91.

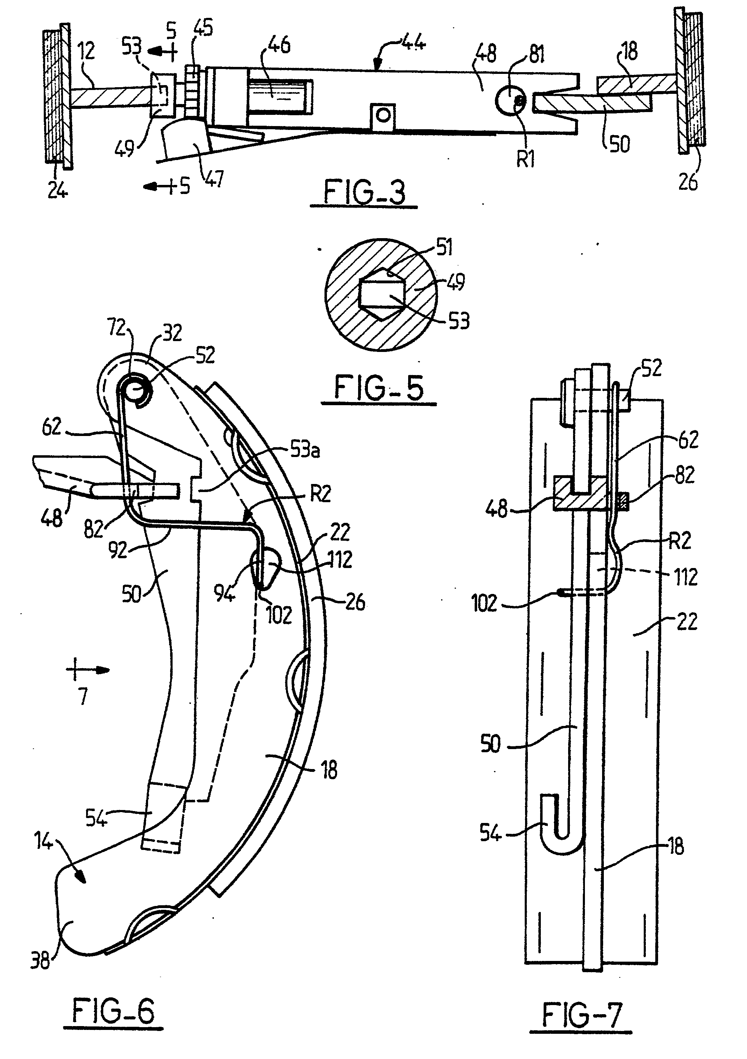

Comme le montre la Figure 4, la branche 91 est appliquée contre la face extérieure du levier de frein 50, opposée à celle qui est en contact avec l'âme 18 du segment de frein. La partie 101 rabattue à 90° pénètre à son extrémité dans un orifice 111 ménagé dans l'âme 18. On conçoit que la partie rabattue 101 coopère, en cisaillement, entre l'âme 18 et le levier 50, et assure la fonction de la butée 56 de la Figure 1.

Le montage du frein de la Figure 2 comportant le ressort de montage R1 est très facile. Il est réalisé après enfilage du ressort R1 à travers le passage 81, par agrafage du crochet 71 sur le pivot 52 suivi de l'insertion de la partie 101 dans l'orifice 111, ou inversement.

Le démontage peut s'effectuer de la façon inverse du montage décrit ci-dessous ou, de préférence, par enfoncement de la partie rabattue 101 dans l'orifice 111 au moyen d'un outil agissant en poussée.

En se référant aux Figures 2,3 et 5, on décrira maintenant le dispositif d'accrochage désigné par la référence générale 162 qui se distingue de celui décrit dans EP-A-0 146 444. (Figure 1 de la présente demande) par les points suivants :

L'élément 46, consiste essentiellement en une vis avec laquelle coopère un écrou 45 muni de dents sur lesquelles agit un cliquet 47.

La vis 46 est montée coulissante dans le corps de l'entretoise 44. Sa tête 49, de forme cylindrique, comporte un évidement hexagonal 51 (voir Figure 5) dans lequel pénètre une saillie 53 du segment 12.

On retrouve (par symétrie, en vue de simplifier la fabrication) cette saillie en 53a sur le segment 14. La saillie 53 est maintenue dans l'évidement hexagonal 51 grâce à un ressort de traction 65 ancré par une de ses extrémités dans un orifice 67 du segment 12 et passant diamétralement à travers la vis 46 au voisinage de la tête 49 à son autre extrémité.

On a montré, aux Figures 6 et 7, un dispositif selon un deuxième mode de réalisation de l'invention.

Comme le montrent ces figures, le ressort en fil élastique R2 comporte deux branches 62 et 92 s'étendant sensiblement dans le même plan. La branche 62 comporte à son extrémité libre une partie recourbée 72 en forme de crochet qui coopère avec une gorge radiale du pivot 52 qu'elle immobilise axialement. Avant d'atteindre le sommet de l'angle du V, la branche 62 pénètre dans un passage 82 ménagé latéralement dans l'entretoise 48. L'extrémité libre de la branche 92 comporte, après un rabattement à 90° dans le plan du V, une partie 94 terminée par une extrémité 102 rabattue à 90° par rapport au plan du V et qui pénètre dans une ouverture 112 ménagée dans l'âme 18 contre laquelle s'étendent les parties 92 et 94 de la deuxième branche du ressort R2 en V. Elle fait saillie au-delà de cette ouverture 112 pour venir intercepter le bord du levier 50 (pour lequel elle constitue la butée 56 du frein connu de la Figure 1).

Les remarques relatives au montage et au démontage du frein des Figures 2 à 5 sont applicables au frein des Figures 6 et 7. On notera toutefois que le passage 82 est ouvert ce qui peut faciliter le montage ou le démontage compte-tenu de l'élasticité du ressort.

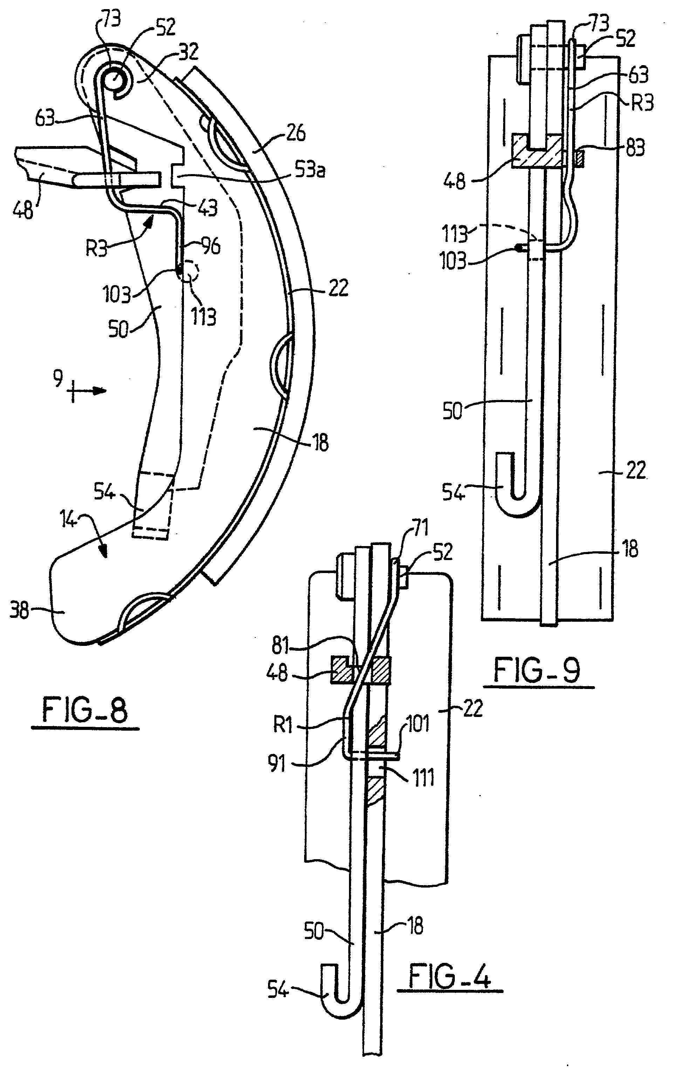

On a montré aux Figures 8 et 9, un dispositif selon un troisième mode de réalisation de l'invention.

Comme le montrent ces figures, le ressort en fil élastique R3 comporte deux branches 63 et 93 s'étendant sensiblement dans le même plan. La branche 63 comporte à son extrémité libre une partie recourbée 73 en forme de crochet qui coopère avec une gorge radiale du pivot 52 qu'elle immobilise axialement.

L'extrémité de la branche 93 comporte, après un rabattement à 90° dans le plan du V une partie 96 terminée par une extrémité 103, rabattue à 90° par rapport au plan du V, qui pénètre dans une ouverture 113 ménagée dans le levier 50. Les parties 93 et 96 de la deuxième branche du ressort R3 en V s'étendent dans un plan parallèle à l'âme 18 et la partie rabattue à 90°, 103, enfoncée dans l'ouverture 113 du levier 50 travaille en cisaillement contre la tranche de l'âme 18 pour réaliser la fonction de butée de repos du levier 50 sur l'âme.

L'invention n'est pas limitée aux modes de réalisation décrits, on conçoit notamment qu'elle s'applique parfaitement à un frein à tambour dans lequel l'entretoise ne comporte pas de moyens de rattrapage d'usure des segments.

**Revendications**

1. Ressort pour l'assemblage d'un frein à tambour du type comportant deux segments (12-14) sollicités vers le tambour par un moteur de frein (28) agissant, à l'encontre d'un ressort de rappel (40), sur les premières extrémités (30-32) desdits segments alors que leurs autres extrémités (36-38) coopèrent avec un bloc d'ancrage (34), l'un des segments (14) portant un levier de frein à main (50) articulé sur un pivot (52) voisin de la première extrémité (32) d'un des segments (14), ledit levier (50) étant relié à l'autre segment (12) par une entretoise (44) dont une extrémité (48) est appliquée contre ledit levier (50) par un ressort (58) en direction sensiblement perpendiculaire à l'axe du pivot du levier, ledit levier comportant une butée (56) qui coopère avec l'âme (18) du segment (14) qui le porte et agit à l'encontre dudit ressort (58) pour définir la position de repos du levier (50) caractérisé en ce que ledit ressort consiste en un fil métallique élastique (R1, R2, R3) en forme de V ayant une extrémité de ses branches (61, 62, 63) formant crochet (71–72–73) qui assure le maintien du pivot (52) du levier (50), ladite branche (61–62–63) passant à travers un passage (81–82–83) prévu dans ladite entretoise (44) pour la solliciter élastiquement vers le levier (50) en coopérant avec l'autre branche du V (91–92–93) qui comporte des moyens d'ancrage (101–102–103) sur l'âme (18) du segment (14) portant le levier (50) et/ou sur ce dernier, lesdits moyens formant butée.

2. Ressort pour l'assemblage d'un frein à tambour selon la revendication 1, caractérisé en ce que les moyens d'ancrage consistent en une partie de fil (101–102–103) rabattue à 90° par rapport au plan du V et qui coopère avec l'âme (18) du segment (14) et le levier (50) qui lui est adjacent.

## Patentansprüche

1. Feder für den Zusammenbau einer Trommelbremse vom Typ mit zwei Backensegmenten (12–14), die gegen die Trommel durch einen Bremsantrieb (28) beaufschlagt werden, der entgegen einer Rückholfeder (40) auf die ersten Endteile (30–32) dieser Backensegmente einwirkt, während ihre anderen Endteile (36–38) mit einem Verankerungsblock (34) zusammenwirken, wobei eines der Backensegmente (14) einen Handbremshebel (50) trägt, welcher an einem dem ersten Endteil (32) eines der Backensegmente (14) benachbarten Schwenkzapfen (52) angelenkt ist, wobei dieser Hebel (50) mit dem anderen Backensegment (12) über eine Strebe (44) verbunden ist, wovon ein Endteil (48) durch eine Feder (58) gegen den Hebel (50) in einer Richtung, welche zu der Schwenkachse des Hebels im wesentlichen senkrecht ist, angedrückt wird, wobei der Hebel einen Anschlag (56) umfaßt, welche mit dem ihn tragenden Steg (18) des Backensegmentes (14) zusammenwirkt und der Feder (58) entgegenwirkt, um die Ruhestellung des Hebels (50) zu bestimmen, dadurch gekennzeichnet, daß die Feder aus einem elastischen, V-förmigen Metalldraht (R1, R2, R3) besteht, dessen eines Ende seiner Schenkel (61, 62, 63) einen Haken (71–72–73) bildet, welcher das Festhalten des Schwenkzapfens (52) des Hebels (50) gewährleistet, wobei dieser Schenkel (61–62–63) durch einen in dieser Strebe (44) vorgesehenen Durchgang (81–82–83) hindurch läuft, um sie zum Hebel (50) hin elastisch zu beaufschlagen, wobei er mit dem anderen Schenkel des V (91–92–93) zusammenwirkt, welcher Mittel (101–102–103) zur Verankerung auf dem Steg (18) des den Hebel (50) tragenden Backensegmentes (14) und/oder auf letzterem die genannten, einen Anschlag bildenden Mittel umfaßt.

2. Feder für den Zusammenbau einer Trommelbremse nach Anspruch 1, dadurch gekennzeichnet, daß die Verankerungsmittel aus einem Drahtabschnitt (101–102–103) bestehen, welcher unter einem 90°-Winkel in bezug auf die Ebene des V gebogen ist und mit dem Steg (18) des Backensegmentes (14) sowie mit dem ihm benachbarten Hebel (50) zusammenwirkt.

## Claims

1. Spring for assembling a drum brake of the type comprising two shoes (12–14) stressed towards the drum by a brake motor (28) acting, counter to a restoring spring (40), on the first ends (30–32) of the said shoes, whilst their other ends (36–38) interact with an anchoring block (34), one of the shoes (14) carrying a hand-brake lever (50) articulated on a pivot (52) adjacent to the first end (32) of one of the shoes (14), the said lever (50) being connected to the other shoe (12) by means of a spacer (44), one end (48) of which is laid against the said lever (50) by means of a spring (58) in a direction which is substantially perpendicular to the axis of the pivot of the level, the said lever having a stop (56) which interacts with the web (18) of the shoe (14) carrying it and which acts counter to the said spring (58) in order to define the rest position of the lever (50), characterized in that the said spring consists of a V-shaped elastic metal wire (R1, R2, R3), one end of one (61, 62, 63) of the branches of which forms a hook (71–72–73) which ensures the retention of the pivot (52) of the lever (50), the said branch (61–62–63) passing through a passage (81–82–83) provided in the said spacer (44), in order to stress it elastically towards the lever (50) in interaction with the other branch of the V (91–92–93) which has means (101–102–103) of anchoring on the web (18) of the shoe (14) carrying the lever (50) and/or on the latter, the said means forming a stop.

2. Spring for assembling a drum brake according to Claim 1, characterized in that the anchoring means consist of a wire portion (101–102–103) bent at 90° relative to the plane of the V and interacting with the web (18) of the shoe (14) and the lever (50) adjacent to it.

_FIG-1_

_FIG-2_

FIG-3

FIG-5

FIG-6

FIG-7

FIG-8

FIG-9

FIG-4